# EUROPEAN PATENT SPECIFICATION

(11) **EP 4 416 813 B1**
(45) Date of publication and mention of the grant of the patent: **08.10.2025**
(21) Application number: 22822404.4
(22) Date of filing: 25.11.2022
(51) Int. Cl.: H02J 3/14, H02J 3/38

(54) **PARTIAL LOAD SHEDDING FOR ACHIEVING FULL REGENERATIVE SUPPLY OF ELECTRIC LOADS**
TEILWEISER LASTABWURF ZUM ERREICHEN EINER VOLLSTÄNDIGEN REGENERATIVEN VERSORGUNG VON ELEKTRISCHEN LASTEN
DÉLESTAGE PARTIEL POUR L`ARRIVÉE D'UN ALIMENTATION COMPLÈTE DES CHARGES ELECTRIQUES PAR DES SOURCES RENOUVABLES

(30) Priority: 10.12.2021 EP 21213686; 21.04.2022 EP 22169273
(43) Date of publication of application: 21.08.2024
(73) Proprietor: Siemens Energy Global GmbH & Co. KG, 81739 München (DE)
(72) Inventor: BAUER, Florian, 63755 Alzenau (DE); HERMSDORF, Christian, 91094 Langensendelbach (DE); WIESENMÜLLER, Wolfgang, 90762 Fürth (DE); ZABLOCKI, Jerzy, 63594 Hasselroth-Gondsroth (DE); DUBSKY, Torsten, 55128 Mainz (DE); WICH, Thomas, 63755 Alzenau (DE)
(86) International application number: PCT/EP2022/083255
(87) International publication number: WO 2023/104544

(56) References cited:
- EP-A1- 3 648 298
- WO-A2-03/077398
- US-A1- 2008 001 479

## Description

The invention relates to a method for operating a production plant to produce a green product while connected to a local energy grid, such as a utility grid.

Many green energy sources (e.g., solar or wind power) are highly volatile meaning that the amount of power they deliver is variable. Without a suitable approach for matching generation and consumption under these difficult boundary conditions, it is more likely that unwanted tripping or disconnection of loads, as well as power sources, may occur. Currently, one solution for this problem is to limit the power usage from the volatile sources at levels below their production capacity. This solution limits the possibility to utilize the full potential of renewable energy available at many remote locations around the globe where the best conditions for the generation of renewable energy may exist.

A method and a device for supporting the frequency in an electric network is known from US 2008/0001479 A1. Further relevant prior art is formed by WO 03/077398 A2 (WOBBEN ALOYS [DE]) 18 September 2003 (2003-09-18) and EP 3 648 298 A1 (HEPU ENERGY ENV TECH CO LTD [CN]) 6 May 2020 (2020-05-06)

Currently, there is a significant unused potential of renewable energy which is not being fed into existing electrical grids. This available power could be leveraged to produce green hydrogen, methanol, e-fuels, or equivalent on a large scale which would provide a significant contribution to drive the energy transition forward.

The invention relates to a method of operating a production plant comprising a plurality of green generating systems connected to a local energy grid and a controller to deliver a first quantity of power and operating a production system to produce a final output product using renewable power generation of a plurality of green generating systems, the method comprising: dispatching the plurality of green generating systems to deliver the first quantity of power to the production plant, the plurality of green generating systems operable to produce a maximum generatable quantity of power and being controlled by the controller; defining a power buffer for the first quantity of power; drawing a second quantity of power from the production plant to power the production system that operates to produce the final output product, the drawing step further comprising: powering a first load of the production system to produce a first output product in response to the consumption of a first portion of the second quantity of power; powering a second load of the production system to produce the final output product based in part on the first output product and in response to the consumption of a second portion of the second quantity of power; calculating a power difference between the maximum generatable quantity of power minus the power buffer and the second quantity of power; reducing the second quantity of power in response to the power difference indicating that the second quantity of power is greater than the maximum generatable quantity of power minus the power buffer, the reducing step following a sequence of reductions which includes: determining a selection criterion for each of the first load and the second load to reduce the second quantity of power, wherein the selection criterion is based in part on at least two of a restart criterion, a product storage criterion, a final product closeness criterion, an oversize criterion, and a magnitude criterion of each of the first load and the second load; reducing one of the first portion of the second quantity of power and the second portion of the second quantity of power based on the calculation of the selection criteria.

The power buffer is defined as an amount of power which could be used to deliver to the production plant if the first quantity of power may not be sufficient. The power buffer is defined as a power buffer for the first quantity of power.

In one aspect, a method of operating a microgrid while isolated from an outside grid includes dispatching a plurality of green generating systems to deliver a first quantity of power to the microgrid. The method also includes drawing a second quantity of power from the microgrid to power a system that operates to produce a final output product. The drawing step further includes powering a first load to produce a first output product in response to the consumption of a first portion of the second quantity of power, and powering a second load to produce the final output product based in part on the first output product and in response to the consumption of a second portion of the second quantity of power. The method also includes calculating a power difference between the first quantity of power and the second quantity of power and reducing the second quantity of power in response to the power difference indicating that the second quantity of power is greater than the first quantity of power. The reducing step follows a sequence of reductions which includes calculating or determining a selection criterion for each of the first load and the second load based in part on at least two of a restart criterion, a product storage criterion, a final product closeness criterion, an oversize criterion, and a magnitude criterion of each of the first load and the second load, and reducing one of the first portion of the second quantity of power and the second portion of the second quantity of power based on the calculation of the selection criteria.

The method may also include calculating the selection criterion based in part on each of the restart criterion, the product storage criterion, the final product closeness criterion, the oversize criterion, and the magnitude criterion.

Calculating the selection criterion may be defined as choosing, determining and/or calculating the selection criterion, wherein the selection criterion may be selected from the different criteria.

The method may also include delivering the first output product to a first buffer, the first buffer increasing the product storage criterion of the first load.

The method may also include calculating an automation level and a production change capability for each of the first load and the second load and calculating the selection criterion based in part on each of the restart criterion, the product storage criterion, the final product closeness criterion, the oversize criterion, the magnitude criterion, the automation level and the production change capability.

The method may also include storing the calculated selection criterion in a microgrid controller.

The method may also include an arrangement in which the first load is one of a demineralized water plant, an electrolyzer, and a methanol synthesis plant and the second load is one of the electrolyzer, the methanol synthesis plant, and a methanol to gasoline plant.

The method may also include an arrangement in which the first load and the second load include a plurality of subsystems, the method further includes calculating the selection criterion for each of the subsystems of the plurality of subsystems.

The method may also include an arrangement in which the green generating systems includes one of a wind turbine, a solar power system, and a green-fueled gas turbine.

The method may also include an arrangement in which the first load includes an electrolyzer, the first output product includes hydrogen, the second load includes a methanol to gasoline plant, and the final output product includes gasoline, and where the drawing step further includes powering a methanol synthesis plant to produce methanol in response to the consumption of the hydrogen and a third portion of the second quantity of power, and delivering the methanol to the gasoline plant.

The method may also include an arrangement in which the first load is a methanol synthesis plant, the first output product includes methanol, the second load is a methanol to gasoline plant and the final output product is gasoline, the method further includes operating an electrolyzer to produce hydrogen, and delivering the hydrogen to the methanol synthesis plant for use in the production of the methanol.

The method may also include delivering the first output product from the first load to the first buffer and delivering the first output product from the first buffer to the second load.

The method may also include an arrangement in which the first buffer is one of a demineralized water tank, a hydrogen tank, and a methanol tank.

The method may also include an arrangement in which the reducing step includes lowering an operational setpoint of one of the subsystems of the plurality of subsystems based in part on the selection criterion.

The method may also include delivering water to the electrolyzer, the electrolyzer using the water to produce the hydrogen, delivering water to an electrical steam generator, and operating the electrical steam generator to generate steam.

The method may also include delivering the steam to a direct air capture plant, operating the direct air capture plant to use the steam to extract carbon dioxide from a flow of air, and delivering the carbon dioxide to the methanol synthesis plant for use in the production of the methanol.

The invention relates further to a production plant using renewable power generation of a plurality of green generating systems to deliver a first quantity of power for powering a production system that operates to produce a final output product, comprising a plurality of green generating systems connected to a local energy grid, the plurality of green generating systems delivers the first quantity of power and operable to produce a maximum generatable quantity of power, a controller to control the plurality of green generating systems; wherein the controller is operable to define a power buffer for the first quantity of power and to define a power difference defined by the maximum generatable quantity of power minus the first quantity of power and the power buffer as a second quantity of power from the production plant which is used to power the production system that operates to produce the final output product.

According to one embodiment of the production plant the final output product is at least one of gasoline, methanol, ammonia or hydrogen.

The final output product may be produced by an electrolyzer generating O2 and H2 out of water and electricity and/or another type of electrolyzer, a direct air capture plant generating CO2 out of air using steam for desorption and electricity and/or a biomass oxyfuel unit generating CO2, a methanol synthesis plant generating methanol out of H2 and CO2 using steam and electricity, a methanol to gasoline plant generating gasoline out of methanol using steam and electricity, an electrical steam generator generating steam out of water using electricity to evaporate the water, and/ora demineralized water plant generating demineralized water out of raw water using electricity.

Other technical features may be readily apparent to one skilled in the art from the following figures, descriptions, and claims.

To easily identify the discussion of any particular element or act, the most significant digit or digits in a reference number refer to the figure number in which that element is first introduced.
FIG. 1 is a schematic illustration of an arrangement of a production plant.
FIG. 2 is a schematic illustration of a portion of the production plant of FIG. 1 including additional details.
FIG. 3 is a schematic illustration of a demineralized water plant operable to produce demineralized water.
FIG. 4 is a schematic illustration of an electrolyzer operable to produce hydrogen from the demineralized water from the demineralized water plant of Fig. 3.

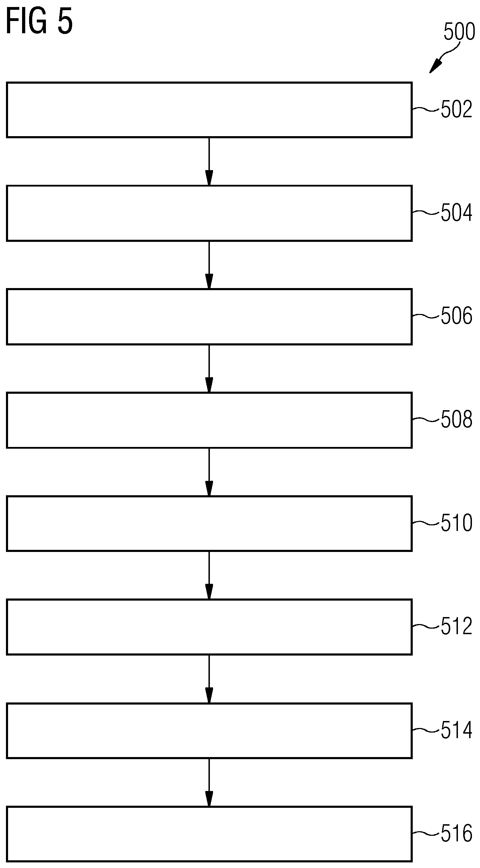

FIG. 5 is a flowchart illustrating operation of a plant master controller during a green partial load shedding process.

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary nonlimiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

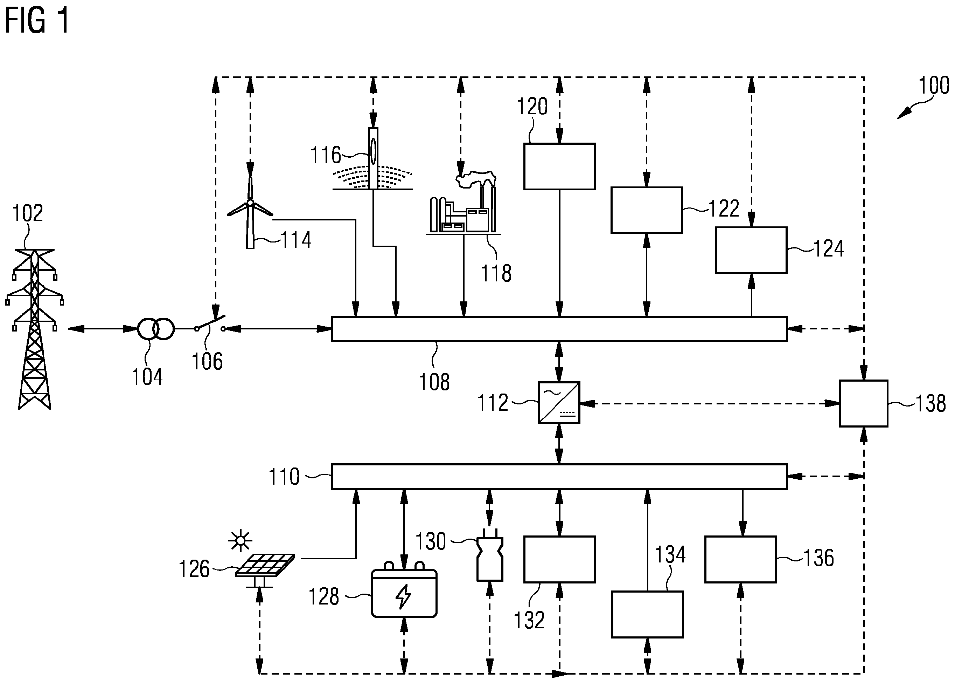

FIG. 1 illustrates one possible arrangement of a production plant 100. Before proceeding, it should be noted that the production plant 100 illustrated in FIG. 1 includes a number of features that may be omitted in other production plant arrangements. In addition, other production plants may include additional features not illustrated in FIG. 1 or described herein. Additional components could include components such as transformers, switches, electrical conditioning components, sensors, controllers, and other components that may add to the operation and functionality of the system. As such, production plant should not be limited to the arrangement of the production plant 100 of FIG. 1.

With reference to FIG. 1, the production plant 100 includes an AC bus 108 (alternating current bus), a DC bus 110 (direct current bus), a plant master controller 138, and a grid connector 106 that operates to selectively connect or disconnect the production plant 100 from a transformer 104 that ultimately connects to a local energy grid 102, such as a utility grid.

The AC bus 108 provides a common connection point for the collection and distribution of alternating current (AC) electrical power. The AC bus 108 also connects to the local energy grid 102 when the grid connector 106 is in a closed position to either deliver electrical power to the local energy grid 102 or to draw electrical power from the local energy grid 102 as may be required. The DC bus 110 is similar to the AC bus 108 and provides a common connection point for the collection and distribution of direct current (DC) electrical power. It should be noted that either of the AC bus 108 or the DC bus 110 could be omitted in other production plant systems.

An AC/DC converter 112 is provided to facilitate the transfer of power between the AC bus 108 and the DC bus 110. The AC/DC converter 112 may include one or more inverters that operate to convert DC power to suitable AC power for addition to the AC bus 108. One or more rectifiers may also be included to convert AC power from the AC bus 108 to DC power for delivery to the DC bus 110. In systems that do not include both the AC bus 108 and the DC bus 110, one or more AC/DC converters 112 could be included to allow the connection of both AC systems and DC systems to the production plant 100.

Any number of power sources, systems, and components can be connected to the AC bus 108 to either deliver power to the AC bus 108 or to extract power from the AC bus 108. The production plant 100 of FIG. 1 includes a wind park 114, a concentrated solar generator 116, and a combustion turbine 118 connected to the AC bus 108, with each operable to deliver power to the AC bus 108.

The wind park 114 includes one or more separate turbines that operate to generate AC power in response to the wind. The power generated by each wind turbine 114 may be AC power or DC power but that power is ultimately delivered to the AC bus 108 as AC power. As is well-known in the art, power generated by wind turbines 114 can be classified as both a green energy source as well as a variable energy source as it relies on proper wind conditions to be capable of generating energy, and the amount generated varies with the wind conditions.

The concentrated solar generator 116 includes one or more plants that operate to concentrate solar energy to generate steam. The steam in turn powers one or more conventional steam turbines to generate AC power that can be delivered directly to the AC bus 108. Like the power delivered by the wind park 114, the power delivered by the concentrated solar generator 116 can be classified as both a green energy source as well as a variable energy source as it relies on access to sunshine to be capable of generating energy, and the amount generated varies with the level of sunshine.

The combustion turbine 118 may include one or more combustion turbines 118 that combust a fuel to produce AC power that can be delivered directly to the AC bus 108. Power delivered by the combustion turbines 118 can be classified as green or not green depending upon the fuel combusted. For example, a combustion turbine 118 that combusts hydrogen or methane from biomass would generally be considered green so long as the source of hydrogen or biomass is green. In addition, other sources of methane can be considered green such that combustion turbines 118 that combust green methane could be considered green. Unlike the wind park 114 and the concentrated solar generator 116, the combustion turbines 118 are not considered variable energy sources as they are capable of delivering full power regardless of external conditions, so long as they have a fuel supply.

The wind park 114, the concentrated solar generator 116, and the combustion turbines 118 are examples of power sources suitable for use in the production plant 100. However, other AC electrical generators 120 are also suitable for use with the production plant 100 and in particular for connection with the AC bus 108. The additional AC electrical generators 120 may be variable and may be green. For example, additional AC electrical generators 120 could include generators powered by hydro, geothermal, nuclear, fossil fuels, tidal, and the like. Many of these power sources are capable of controlling the frequency and voltage of the AC power delivered to the AC bus 108, thereby adding to the stability of the local energy grid 102.

In addition to power sources, AC energy storage systems 122 or power conditioning systems may also be connected to the AC bus 108. AC energy storage systems 122 include systems that use AC power to store energy, typically in another form, when that energy is abundant and then use that stored energy to generate AC power when additional AC power is required by the AC bus 108 or the local energy grid 102. One example of an AC energy storage system 122 is pumped storage hydro in which water is pumped to a higher elevation when excess energy is available, and the water is passed through a hydro turbine when AC power is required. Another AC energy storage system 122 includes a compressed gas storage system that operates to compress a gas with excess energy and then power a turbine or other device using that compressed gas to generate AC power when energy is needed. Power conditioning systems could include synchronous condensers or flywheels that operate to control reactive power and provide fast frequency response in some cases (e.g., spinning reserve).

Another energy storage system could include a production facility that uses excess energy to produce hydrogen, methane, gasoline, or other compounds that efficiently store energy. With a hydrogen facility, excess electricity is used in an electrolysis process to produce hydrogen. The hydrogen is then pressurized and stored. When additional AC power is required, the stored hydrogen is used as fuel in the combustion turbine 118. Many other AC energy storage systems 122 are suitable for use with the AC bus 108.

As such, the production plant 100 should not be limited to those examples discussed herein.

Also attached to the AC bus 108 are one or more AC loads 124. AC loads 124 are loads that do not provide power to the AC bus 108 but rather only draw AC power. AC loads 124 can include factories, homes, data storage systems, production facilities, and the like.

Like the AC bus 108, any number of systems and components can be connected to the DC bus 110 to either deliver power to the DC bus 110 or to extract power from the DC bus 110. For example, the production plant 100 of FIG. 1 includes a PV solar generator 126 connected to the DC bus 110 to deliver DC power to the DC bus 110. Power delivered by the PV solar generator 126 can be classified as both a green energy source as well as a variable energy source as it relies on access to sunshine to be capable of generating energy, and the amount generated varies with the level of sunshine.

Other DC electrical generators 134 may also be connected to the DC bus 110 to deliver DC power to the DC bus 110. For example, fuel cells could be connected to the DC bus 110 to deliver power to the DC bus 110. Many other DC power sources could also be employed such as but not limited to DC generators, alternators, and other variable frequency sources that include a rectifier.

The DC bus 110 is well-suited to supporting many energy storage devices including batteries 128, ultracapacitors 130, and other DC energy storage systems 132. Batteries 128 and ultracapacitors 130 are well-known energy storage devices with virtually any type and arrangement being suitable for use with the production plant 100 of FIG. 1. Other DC energy storage systems 132 could include flywheels, electrochemical capacitors, thermal storage, and the like.

One or more DC loads 136 may be connected to the DC bus 110 to draw DC power therefrom. Unlike energy storage devices that can transfer power to and from the DC bus 110, DC loads 136 only draw power from the DC bus 110. DC loads 136 could include heating systems, data centers, computers, or any other system or component that operates on or consumes DC power.

It should be noted that any AC system including loads, power-producing systems, and storage systems could be converted to DC systems using one or more rectifiers. Similarly, any DC system could be converted to AC with one or more inverters. As such, the examples provided herein should not be limited to connection to the AC bus 108 or the DC bus 110 as described herein.

The plant master controller 138 is typically a microprocessor-based controller that includes a microprocessor, memory, a memory storage device, input devices, and some form of output such as a display that allows for user interaction. Of course, other controllers or arrangements of controllers could be employed. It is also important to note that while FIG. 1 illustrates a single plant master controller 138, multiple components or systems could be distributed throughout the production plant 100 and could cooperate with one another to perform the functions of the plant master controller 138.

The plant master controller 138 communicates with the various components of the production plant 100 to monitor and/or control their operation. The plant master controller 138 may include sensors that monitor temperatures, pressures, power flow, valve positions, switch and relay positions, voltage, frequency, and the like to operate the production plant 100. The plant master controller 138 also communicates with the AC/DC converter 112 and can operate to control the quantity of power flow and the direction of power flow between the AC bus 108 and the DC bus 110.

The plant master controller 138 may also operate to control the dispatching of power to select the desired power sources to achieve a goal. For example, the plant master controller 138 could operate to maximize the use of power from green energy sources when it is available to power the AC loads 124 and the DC loads 136 while also storing any excess power. When green power is not available, the plant master controller 138 could operate to use stored energy before reducing power consumption. The plant master controller 138 also operates to control the grid connector 106 to connect or disconnect the local energy grid 102 and the production plant 100.

In operation, the plant master controller 138 determines the total load required by the AC loads 124 and the DC loads 136 and selects the power generation sources to provide at least that load. Specifically, the plant master controller 138 may operate to first dispatch the green power sources, whether AC or DC to provide the necessary power to the AC loads 124 and the DC loads 136. If there is excess green power available, the plant master controller 138 may initiate operation of one or more of the various energy storage systems to store that power. If the green power is not sufficient to support the AC loads 124 and the DC loads 136 the plant master controller 138 determines which power source or sources to use to deliver the additional power. The plant master controller 138 may initiate additional power generators such as the combustion turbines 118 and/or may utilize energy stored in one of the AC energy storage systems 122, the batteries 128, the ultracapacitors 130, and/or the DC energy storage systems 132.

Under some conditions, the power generation capacity of the production plant 100 may exceed the AC loads 124, the DC loads 136, and the energy storage capacity of the production plant 100. In these situations, energy production can be reduced, or excess power can be delivered to the local energy grid 102.

Before proceeding, it should be noted that terms such as systems, loads, subsystems, and the like are interchangeable. Typically, a subsystem is part of a system or a load, however, subsystems can themselves be loads or systems as well. As used herein, terms such as "power source" can refer to any component, device, or system that is operable to deliver power to the microgrid 100 or to another load. Similarly, the term "load" could refer to any component, device, or system that draws power from the microgrid 100 or another source.

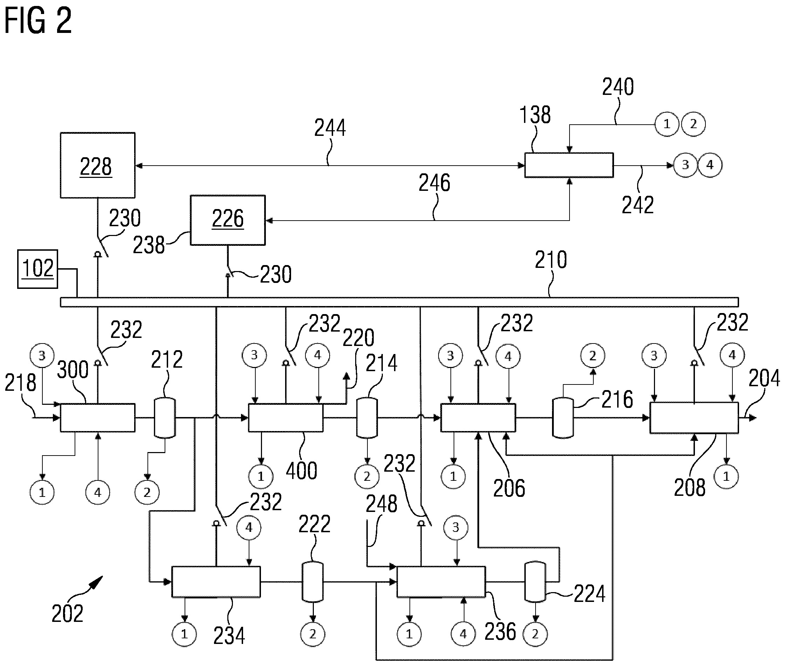

FIG. 2 schematically illustrates a specific portion of the production plant 100 of FIG. 1, which is intended to utilize only green power sources 228 to power a production system 202 that operates to produce a final output product 204. The arrangement of FIG. 2 includes a plant master controller 138 that operates to control the production system 202, the green power sources 228, any AC energy storage systems 226, and any DC energy storage systems 238 to operate the production system 202 using only green energy such that the final output product 204 is deemed "green". As used herein, a "green power source 228" is a power source that operates using only renewable inputs to drive the energy source. Examples of green power sources 228 include but are not limited to, wind power, geothermal, hydroelectric, solar power, biomass, fuel cells, gas turbines (combusting green fuels), nuclear power, and the like. Similarly, the term "deemed green" refers to products made from processes that are powered by green power sources 228. In some cases, being deemed green requires that at least 90% up to 100% of the power used to power the process is generated by green power sources 228, with other designations requiring different percentages.

In some constructions, the plant master controller 138 assigns a green coefficient to each of the power sources. The green coefficient can be as simple as a binary choice such as "is green" and "is not green". However, other arrangements may have more varied choices for green coefficients. For example, a gas turbine that operates on a mixed fuel of green methane or hydrogen and a non-green fuel may have a value between green and not green. For example, a green source may have a value of one, a non-green source may be a zero, while a variable source such as the one just described may have a green coefficient of one-half. Of course, other arrangements or methods may be used to identify power sources as green or not green and to select those power sources for dispatching.

As discussed with regard to FIG. 1, the green power sources 228, which are a subset of the AC electrical generators 120 and the DC electrical generators 134 of FIG. 1 are connected to the AC bus 210 (or the DC bus 110) via a controllable input switch 230 to provide useable electricity. Similarly, the AC energy storage systems 226 and the DC energy storage systems 238 are connected to the AC bus 210 (or the DC bus 110) via a controllable input switch 230 to provide useable electricity. Power generation communication links 244 and power storage communication links 246 extend between the green power source 228 and the plant master controller 138 and between the AC energy storage systems 226, DC energy storage systems 238, and the plant master controller 138 to allow the plant master controller 138 to control the operation of the green power sources 228, the AC energy storage systems 226, and the DC energy storage systems 238. The power generation communication links 244 and the power storage communication links 246 provide two-way communication such that in addition to the aforementioned control signals, sensor signals can be transmitted to the plant master controller 138 to allow for monitoring and control. Thus, during operation, the plant master controller 138 is able to measure a quantity of power delivered to the production plant 100 from the various energy sources. It should be noted that the power generation communication links 244 and the power storage communication links 246 can be wired connections, wireless connections, or any combination thereof as may be desired.

The production system 202 operates to draw a quantity of power from the production plant 100 to convert input materials into the final output product 204. The quantity of power drawn from the production plant 100 is periodically compared to the quantity of power delivered to the production plant 100 to keep the production plant 100 in balance. If the comparison shows too much power is being drawn by the production system 202, the plant master controller 138 will operate to increase the power delivered to the production plant 100 or will reduce the quantity of power drawn from the production plant 100. One of the goals of the present system is to produce the final output product 204 using only green energy or at least a sufficient percentage of green energy to deem the final output product 204 as a green product. As will be discussed below, the plant master controller 138 operates to achieve this goal.

The production system 202 can be virtually any system capable of producing any product. While FIG. 2 will be described as a specific system, it should be understood that the example is provided for clarity and the production system 202 should not be limited to this arrangement alone. Additionally, while the production system 202 is illustrated as producing a final output product 204 in the form of gasoline, other products (e.g., methanol, ammonia, or hydrogen) produced as part of the process could be the ultimate final output product 204 in other arrangements. Therefore, the production system 202 should not be limited to systems that produce a final output product 204 in the form of gasoline.

Typically, a production system 202 can be divided into a number of loads with each load including subsystems with partial loads like pumps, fans, compressors, or heaters therein. The production system 202 includes a first load in the form of a demineralized water plant 300, a second load in the form of an electrolyzer 400, a third load in the form of a methanol synthesis plant 206, a fourth load in the form of a methanol to gasoline plant 208, a fifth load in the form of an electrical steam generator 234, and a sixth load in the form of a direct air capture plant 236. Each of the loads is selectively connected to the AC bus 210 via an output switch 232. Each output switch 232 is separately controllable to allow the plant master controller 138 to selectively separate one or more of the loads from the AC bus 210 as may be required. Also, significant partial loads can be shut down or tripped by the plant master controller 138 as may be required.

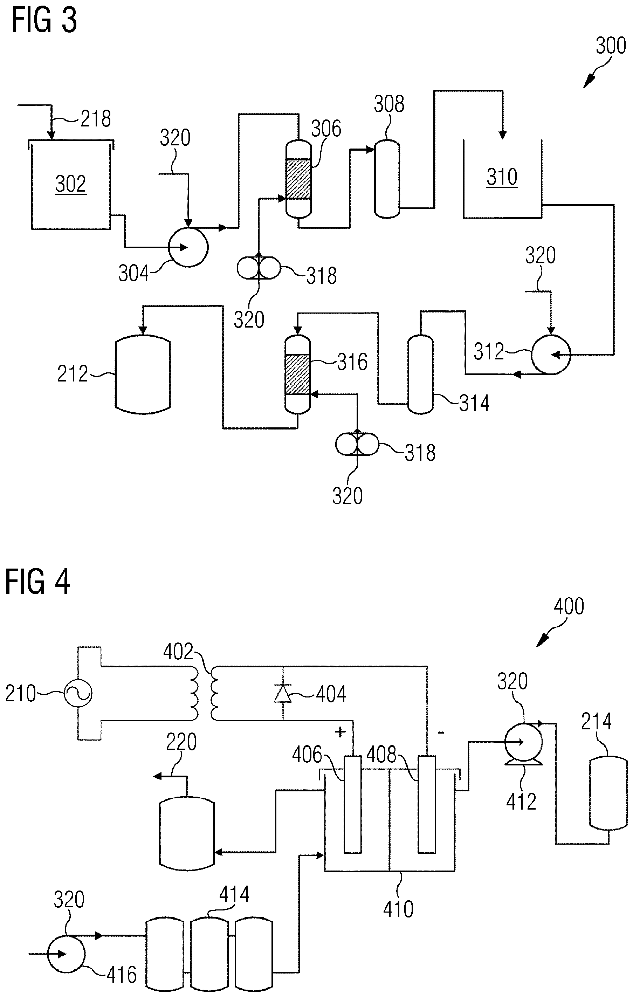

An input material in the form of raw water 218 is directed to the demineralized water plant 300 at the start of the production system 202. As will be discussed in greater detail with regard to FIG. 3, the demineralized water plant 300 includes a number of subsystems that operate to convert the raw water into demineralized water with many of these subsystems consuming power during operation. In the illustrated arrangement, the demineralized water is delivered to a demineralized water storage tank 212 following passage through the demineralized water plant 300. It should be noted that one or more tanks could be employed for the storage of the water. These tanks can be open tanks (i.e., unpressurized), closed pressurized tanks, or any combination thereof. It should also be noted that the term "tank" as used herein refers to a storage device capable of storing the desired medium under the desired conditions, thereby acting as a buffer. In many cases, these will be conventional tanks. However, some media or some storage conditions may better utilize storage containers that, while referred to as tanks, are not necessarily tanks as that word might normally be used.

A portion of the demineralized water is directed to the electrolyzer 400 with a second portion of the demineralized water being delivered to the electrical steam generator 234. Each of the electrolyzer 400 and the electrical steam generator 234 include subsystems that consume electrical power and use the demineralized water to produce an output product. In the case of the electrolyzer 400, the subsystems (discussed in greater detail with regard to FIG. 4) operate in response to the receipt of electrical power to produce an output product in the form of hydrogen, with a stream of oxygen 220 being produced as well. The hydrogen is delivered to a hydrogen tank 214 for storage and future use. The hydrogen may be refrigerated and/or pressurized for storage in the hydrogen tank 214 as may be desired. The oxygen 220 may be collected and stored for future use or may simply be discharged into the atmosphere.

The electrical steam generator 234 includes subsystems that operate in response to the receipt of electrical power to heat the demineralized water to produce steam. The electrical steam generator 234 electrically heats the water without any combustion, thereby maintaining the green nature of the production system 202. However, other constructions may employ a combustion process that utilizes a green fuel to produce the steam. The produced steam is fed to a steam tank 222 or other steam storage or buffering system following production.

A portion of the steam is directed to the direct air capture plant 236 which also receives a flow of air 248 as well as electrical power and operates to extract carbon dioxide from the air 248. The direct air capture plant 236 includes subsystems that operate to produce an output in the form of carbon dioxide. The carbon dioxide is directed to a carbon dioxide tank 224 in which the carbon dioxide is stored for future use. Again, the carbon dioxide may be chilled and/or compressed for storage in the carbon dioxide tank 224. As will be discussed, portions of the steam may also be directed to the methanol synthesis plant 206 and the methanol to gasoline plant 208.

The methanol synthesis plant 206 includes subsystems that receive as inputs electrical power from the AC bus 210, hydrogen from the hydrogen tank 214, carbon dioxide from the carbon dioxide tank 224, and steam from the steam tank 222 as far as required for the specific process applied and use those inputs to produce an output product in the form of methanol. The methanol is directed to a methanol tank 216 for storage. In some constructions, the methanol is chilled and/or pressurized for storage in the methanol tank 216.

The methanol to gasoline plant 208 receives as inputs, electrical power from the AC bus 210, steam from the steam tank 222 as far as required for the specific process applied, and methanol from the methanol tank 216. The methanol to gasoline plant 208 includes subsystems that operate to use the various inputs to produce the final output product 204 in the form of gasoline. The gasoline may be directed to a pipeline for distribution and/or to various storage facilities for collection and eventual distribution and use.

Each of the tanks 212, 214, 216, 222, and 224, are optional and can be omitted if desired. In addition, while the tanks 212, 214, 216, 222, and 224 are described as storing product, in some cases the storage period may be very short and essentially zero. For example, if one of the loads requires 100% of the product produced by an upstream load, that production simply passes through the tank as it travels to the downstream load. Nevertheless, the tanks 212, 214, 216, 222, and 224 may be provided to provide a buffer to simply store extra production or fill in for periods of underproduction as will be discussed.

FIG. 3 is a simplified schematic of the demineralized water plant 300 better illustrating some of the possible subsystems. As shown, the raw water 218 enters the demineralized water plant 300 and is collected in a raw water tank 302. A first pump 304 operates in response to the receipt of electrical power 320 to deliver raw water 218 to a first filter 306 where it is filtered. The water is then delivered to a cation bed 308 that performs a first treatment on the water. The water may then be delivered to a degasser 310 or settling tank before a second pump 312 operates in response to the receipt of electrical power 320 to pump the water into an anion bed 314 for further treatment, through a second filter 316 and ultimately into the demineralized water storage tank 212. Each of the first filter 306 and the second filter 316 may include an air blower 318 that operates to blow air or another gas into the respective filters to backwash any filter media within the filters.

Thus, the multiple components of the demineralized water plant 300 and in particular, those that include components that receive electrical power 320 can be considered subsystems of the demineralized water plant 300. It should be noted that the demineralized water plant 300 illustrated in FIG. 3 is greatly simplified and is provided simply to illustrate some possible subsystems within the demineralized water plant 300. Of course, some of these subsystems could be eliminated and additional subsystems could be included in the demineralized water plant 300.

FIG. 4 is a simplified schematic of an arrangement of an electrolyzer 400 better illustrating some of the possible subsystems. As shown, electrical power is provided from the AC bus 210 and may be delivered to an electrolyzer transformer 402 to adjust the current and/or voltage of the AC power. A rectifier 404 is provided to convert the AC power to a direct current for delivery to one or more electrolyzer units 410. As an alternative, DC power can be delivered directly from the DC bus 110, thereby eliminating the need for the rectifier 404.

Each electrolyzer unit 410 includes a tank or vessel that is filled with an electrolyte (i.e., saltwater) and contains a cathode 406 and an anode 408. During the electrolysis process, electrical power separates the water within the electrolyzer unit 410 into hydrogen and oxygen. The hydrogen is collected using a hydrogen compressor 412 that operates in response to the receipt of electrical power 320 to compress the hydrogen for storage in the hydrogen tank 214. While not illustrated, a hydrogen refrigeration system may also be employed to cool or liquefy the hydrogen for more efficient storage. The oxygen 220 may be collected and stored for future use or may simply be discharged into the atmosphere.

The electrolysis process consumes water, thereby requiring a replenishment subsystem. As illustrated in FIG. 4, a water pump 416 operates in response to the receipt of electrical power 320 to pump demineralized water from the demineralized water storage tank 212 to a water purifier 414. The water purifier 414 may include additional filters, water treatment devices, or salt systems that condition the water for delivery into the electrolyzer unit 410.

Thus, the multiple components of the electrolyzer 400 and in particular, those that include components that receive electrical power 320 can be considered subsystems of the electrolyzer 400. It should be noted that the electrolyzer 400 illustrated in FIG. 4 is greatly simplified and is provided simply to illustrate some possible subsystems within the electrolyzer 400. Of course, some of these subsystems could be eliminated and additional subsystems could be included in the electrolyzer 400.

FIG. 3 and FIG. 4 as well as the descriptions of the demineralized water plant 300 and the electrolyzer 400 are provided as examples of subsystems within these larger loads or systems. It should be understood that each of the methanol synthesis plant 206, the methanol to gasoline plant 208, the electrical steam generator 234, and the direct air capture plant 236 may include subsystems similar to those described with regard to FIG. 3 and FIG. 4. The description of these subsystems has been omitted for the sake of brevity.

As discussed, the plant master controller 138 operates to periodically compare the quantity of power delivered to the production plant 100 and the quantity of power drawn from the production plant 100 to maintain a balance therebetween. If more power is drawn than delivered, the missing power will be imported from the local energy grid 102.

Unbalance is particularly concerning when rapidly varying loads are attached to the production plant 100 or when the electrical generators, and in particular the green power sources 228 are volatile or highly variable. For example, wind turbines are susceptible to changes in wind speed such that the power generated, and importantly the maximum power available from the wind park 114 varies and is unpredictable. Similarly, solar power is reliant upon sunshine. If the level of sunshine suddenly changes (e.g., a cloud forms), the level of power generated by the PV solar generator 126 or the concentrated solar generator 116 would drop.

To compensate for this unbalance, the production plant 100 could include excess generation or could limit the loads attached to the production plant 100. In addition, less volatile power supplies including non-green sources could be included in the production plant 100 or missing power could be imported from the local energy grid 102. However, the use of these generators or the connection to the local energy grid would result in a non-green final output product 204 and is therefore not desirable.

An alternative to the aforementioned options is to provide the plant master controller 138 with a plant coordination system that balances the power in the production plant 100 by controlling the quantity of power drawn from the production plant 100 when additional power, and in particular additional green power or power from stored energy sources cannot be used to increase the quantity of power delivered to the production plant 100.

The quantity of power drawn from the production plant 100 is controlled using a green partial load shedding process that is implemented following a series of escalation levels. To implement the green partial load shedding process, the plant master controller 138 calculates or stores precalculated values for one or more parameters or criteria that aid in determining how best to reduce the load. The parameters or criteria may be calculated for each load and/or each subsystem within each load as may be desired. The criteria can include any of an automation level, a production change capability, a restart criterion, a product storage criterion, a final product closeness criterion, an oversize criterion, and a magnitude criterion.

"Automation level" refers to a degree of automation of a load, system, or subsystem. Loads, systems, or subsystems that require operator intervention or a number of manual tasks in order to start, stop or change states would have a low automation level. In contrast, loads, systems, or subsystems that automatically start, stop, or change operation with little to no user intervention would have a high automation level.

"Production change capability" refers to the speed or time required for a load, system, or subsystem to transition between operational setpoints as well as the variation between minimum and maximum setpoints. For example, a load, system, or subsystem that can change operational setpoints rapidly as compared to other loads, systems, or subsystems (e.g., 5% per minute) would have a high production change capability. In contrast, a load, system, or subsystem that is limited to slow operational changes (e.g., 10% per hour) would have a lower production change capability. Similarly, the range of these operational changes also affects the production change capability. For example, two loads, systems, or subsystems that are both capable of changing setpoints at the same rate may still have different production change capabilities if one load, system, or subsystem can operate in a range from 20% load to 100% load while the other load, system, or subsystem only operates from 70% to 100% load. The larger range would lead to a higher production change capability.

"Restart criterion" is an indication of the relative speed with which a system can restart operation from an idle or shutdown state. A system that can be restarted in minutes would have a higher restart criterion than a system that requires hours to restart. For example, the electrolyzer 400 can resume hydrogen production within minutes, if the pressure within the system is maintained. In contrast, the methanol to gasoline plant 208 may need hours to resume gasoline production. Therefore, considering the restart criterion, in this case, the electrolyzer 400 would be load shed with a higher priority than the methanol to gasoline plant 208.

"Product storage criterion" refers to the level or ability of a system to store its output product for future use in downstream systems. Systems capable of storing large quantities of output product have a higher product storage criterion than systems that can store little or no output product. A first load or system may include storage that is filled to a high level. The storage can feed product to a successive load or system to keep the subsequent load in operation for a certain time frame, even if the first load or system is shed. For example, load shedding the electrolyzer 400 would stop hydrogen generation. If there is storage (i.e., hydrogen tanks 214) between the electrolyzer 400 (for intermittent storage of generated hydrogen) and the successive methanol synthesis plant 206 (generating methanol out of hydrogen and carbon dioxide), load shedding for the electrolyzer 400 could be performed while the methanol synthesis plant 206 remains in service as long as the buffered hydrogen is sufficient to feed the methanol synthesis plant 206. Therefore, considering the product storage criterion, in this case, the electrolyzer 400 would be load shed with a higher priority than the methanol synthesis plant 206.

"Final product closeness criterion" is a measure indicative of the closeness of the output product of a load to the desired final output product 204 of the production system 202. For example, if a load operates to produce the desired final output product 204 directly, that load would have a high final product closeness criterion. In contrast, a load that produces an output product that is used in a first downstream load to make a second output product that is in turn delivered to a second downstream load that produces the desired final output product 204 would have a low final product closeness criterion. The ultimate task for a plant is to produce the final output product 204. If the last main system or load in the row (i.e., outputs the final output product 204) would be load shed, production of the final output product 204 would stop immediately. In contrast, if a prior system or load in the row is shed, depending on storage between succeeding loads or systems, output products and the final output product 204 could still be generated so long as stored components are available. For example, the electrolyzer 400 generates hydrogen, which is used in the methanol synthesis plant 206 to generate methanol, which in turn is used in the methanol to gasoline plant 208 to generate gasoline. Considering the final product closeness criterion, in this case, the electrolyzer 400 would be load shed with the highest priority, followed by the methanol synthesis plant 206, and finally followed by the methanol to gasoline plant 208 which would have the lowest priority based on the final product closeness criterion.

"Oversize criterion" is a measure of the capacity of a particular subsystem with respect to the capacity of a system (including the subsystem) arranged to produce a desired final product. For example, if a system is designed to produce a desired final product at a maximum level of 100%. A subsystem or load capable of delivering an output product up to 120% of what is required by the system at a maximum level would have a higher oversize criterion than if the subsystem could only deliver 100% of what is required by the system at a maximum level when operated at its maximum load. The nominal production case is defined as the operation of the total plant with 100% final output product 204. For example, for 100% methanol production the methanol synthesis plants 206 may need 200kg of hydrogen per hour (equal to 100%) and 1500kg of carbon dioxide per hour (also equal to 100%). If the electrolyzer 400 is designed for a maximum generation of 240kg of hydrogen per hour (equal to 120% of that required, i.e., oversized by 20%) while the direct air capture plant 236 is designed for a maximum generation of 1500kg of carbon dioxide per hour (equal to 100% of that required, i.e., no oversizing) and there is storage provided, the oversize criterion would select the electrolyzer 400 for load shedding prior to the direct air capture plant 236. Following this example, if the shutdown of the electrolyzer 400, or a subsystem of the electrolyzer 400 is required for a short period of time, generation of methanol would not be interrupted, as long as hydrogen and carbon dioxide can be supplied by the storage tanks. When the electrolyzer 400, or the subsystems can be restarted, the electrolyzer 400 can easily refill the hydrogen tanks 214 (if operated at maximum generation, i.e., at 120%). In contrast, the direct air capture plant 236 is not able to refill the carbon dioxide tanks 224 even if operated at maximum generation (100%), because in this case all the generated carbon dioxide is instantaneously consumed by the methanol synthesis plant 206 when it is operated at nominal production. Thus, in this example, the oversize criterion would lead to load shedding of the electrolyzer 400 or subsystems within the electrolyzer 400 before the direct air capture plant 236 or its subsystems are load shed as the electrolyzer 400 is able to make up for lost production while the direct air capture plant 236 cannot.

"Magnitude criterion" refers to the total level of power consumed by a load or partial load as compared to an amount of load that may be required to be shed. Thus, loads or partial loads that consume large amounts of power have a high magnitude criterion and would only be considered for shedding in instances where a large power reduction is required. For example, in one arrangement, operation of the electrolyzer 400 requires 2000kW of power, while operation of the direct air capture plant 236 requires 400kW of power. If a power shortage of 350 kW is detected, the magnitude criterion would dictate that the direct air capture plant 236 be load shed before the electrolyzer 400.

When the plant master controller 138 determines that a reduction in the quantity of power drawn from the production plant 100 is required (i.e., additional power, and in particular additional green or renewable power is insufficient or cannot be added to the production plant 100), the plant master controller 138 follows a series of steps. First, the plant master controller 138 determines if the power reduction can be achieved by reducing the operational setpoints of one or more of the loads to achieve part-load operation of those loads. In making this selection, the plant master controller 138 may focus on loads with a high load production change capability. Loads with a high automation level may follow automatically, while loads with a low automation level will need operator action to decrease the load. These load changes result in part-load operation of some or all the loads in the system which leads to an overall power consumption reduction. Unfortunately, these changes will typically lead to a reduction in output of the final output product 204.

If reducing the operational setpoints is too slow and/or not sufficient to achieve the necessary power consumption reduction, the plant master controller 138 implements a green partial load shedding process.

Usually load shedding is used as one of different measures to keep electrical grids stable even in case of disturbances. It can be defined as act or practice of temporarily reducing the supply of electricity to an area to avoid overloading the generators. Green partial load shedding is implemented by the plant master controller 138 by selecting and shedding electrical load in a totally different way. Loads are not shed to stabilize an electrical grid but are shed to enhance the likelihood of 100% green production. In addition, large loads are generally not simply disconnected as a whole. The target is to enable shedding of dispensable loads, i.e., significant partial loads (like pumps, fans, compressors, or heaters) of a system or load in a way that keeps disturbances on the production plant 100 to an acceptable level. Acceptable level means that damage is avoided, and restarts of loads, systems, or subsystems are not delayed more than necessary. For example, a green partial load shedding for the methanol to gasoline plant 208 should not result in the requirement to purge parts of this system with nitrogen prior to a restart.

To achieve green partial load shedding, each load, system, or subsystem is analyzed to determine values for some or all the predefined criteria like the automation level, the production change capability, the restart criterion, the product storage criterion, the final product closeness criterion, the oversize criterion, and the magnitude criterion. The plant master controller 138 then uses some or all these criteria to determine which loads, systems or subsystems should be shed by tripping or fast shutting down, and which should be kept in service and at what operating level they should be kept in service. Green partial load shedding can be a very fast measure and can be automatically activated to prevent power import from the local energy grid 102.

For example, heaters within the methanol to gasoline plant 208 may be tripped instantaneously (as the combination of the criteria indicates they would be an early subsystem to trip), but pumps that provide flow through these heaters may remain in service for some time prior to shutting down. In contrast, pumps within the demineralized water plant 300 or fans of the direct air capture plant 236 may be tripped instantaneously if required (see FIG. 3 and FIG. 4). Also, important auxiliary systems such as cooling water systems may not be considered for green partial load shedding as ceasing operation of these systems may cause harm or damage to other systems or subsystems.

As noted, one criterion considered by the plant master controller 138 is the product storage criterion. Increasing storage **(e.g.,** buffer tanks) increases the value of the product storage criterion and provides additional freedom for green partial load shedding. Storage (e.g., buffer tanks) between the individual loads or systems, or energy storage systems (e.g., battery 128 storage systems) can provide additional freedom for green partial load shedding. A system for the storage of energy could supply additional electrical power during periods when sufficient renewable energy is not available.

The use of green partial load shedding with the plant master controller 138 enhances the ability to provide 100% green production even during periods of rapid drops in renewable power generation. Green power production is maintained at the maximum possible to allow for the maximum use and recovery of renewable power generation production.

When reducing setpoints for loads, systems or subsystems, the plant master controller 138 reduces systems with a high automation level and with a high production change capability. These setpoint changes can be done seamlessly and automatically and because the loads or subsystems have a high production change capability, they are more likely to allow for quick and large setpoint changes without adversely affecting the operation of the production system 202.

If setpoint adjustments alone are not sufficient, the plant master controller 138 will look at all the available criteria to determine which loads, systems or subsystems are most suitable for further setpoint reduction or ultimately shutdown. Typically, a high automation level is one criterion that is important. The plant master controller 138 may select those loads, systems and subsystems that have the highest automation level and that have the highest production change capability. The high automation level is particularly important when transitioning to standby or shutting down a load, system or subsystem as it is indicative of the difficulties involved in completing the shutdown as well as initiating a restart. For example, stopping operation of the water pump 416 in the electrolyzer 400 does not require any significant operational steps. However, shutting down a methanol synthesis plant 206 may require the manual purging of fuel lines and other components to remove any residual methanol. Therefore, the automation level of the of the water pump 416 in the electrolyzer 400 would be higher than the automation level of the methanol synthesis plant 206. Of course, each of the other criteria described herein is also considered by the plant master controller 138 to make the ultimate decisions.

If the reduction of certain subsystems is ultimately not sufficient to achieve the necessary power consumption reduction, the plant master controller 138 may transition one or more subsystems into a standby mode, and ultimately, if this is unsuccessful the plant master controller 138 will disconnect loads as a whole by opening output switches 232 or shut down selected loads, systems, or subsystems.

In block 502, a method of partial load shedding 500 dispatches a plurality of green generating systems to deliver a first quantity of power to the microgrid. In block 504, the method of partial load shedding 500 draws a second quantity of power from the microgrid to power a system that operates to produce a final output product, the drawing step further comprising. In block 506, the method of partial load shedding 500 powers a first load to produce a first output product in response to the consumption of a first portion of the second quantity of power. In block 508, the method of partial load shedding 500 powers a second load to produce the final output product based in part on the first output product and in response to the consumption of a second portion of the second quantity of power. In block 510, the method of partial load shedding 500 calculates a power difference between the first quantity of power and the second quantity of power. In block 512, the method of partial load shedding 500 reduces the second quantity of power in response to the power difference indicating that the second quantity of power is greater than the first quantity of power, the reducing step following a sequence of reductions which includes. In block 514, the method of partial load shedding 500 calculates or determines a selection criterion for each of the first load and the second load based in part on at least two of a restart criterion, a product storage criterion, a final product closeness criterion, an oversize criterion, and a magnitude criterion of each of the first load and the second load. In block 516, the method of partial load shedding 500 reduces one of the first portion of the second quantity of power and the second portion of the second quantity of power based on the calculation of the selection criteria.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the descriptions in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A method of operating a production plant (100) comprising a plurality of green generating systems connected to a local energy grid (102) and a controller (138) to deliver a first quantity of power and operating a production system (202) to produce a final output product (204) using renewable power generation of the plurality of green generating systems, the method comprising:
dispatching the plurality of green generating systems to deliver the first quantity of power to the production plant (100), the plurality of green generating systems operable to produce a maximum generatable quantity of power and being controlled by the controller (138);
defining a power buffer for the first quantity of power as an amount of power which could be delivered to the production plant (100) if the first quantity of power is insufficient;
drawing a second quantity of power from the production plant (100) to power the production system (202) that operates to produce the final output product (204), the drawing step further comprising;
powering a first load (206, 208, 234, 236, 300, 400) of the production system (202) to produce a first output product in response to the consumption of a first portion of the second quantity of power;
powering a second load (206, 208, 234, 236, 300, 400) of the production system (202) to produce the final output product based in part on the first output product and in response to the consumption of a second portion of the second quantity of power;
calculating a power difference between the maximum generatable quantity of power minus the power buffer and the second quantity of power;
reducing the second quantity of power in response to the power difference indicating that the second quantity of power is greater than the maximum generatable quantity of power minus the power buffer, the reducing step following a sequence of reductions which includes:
determining a selection criterion for each of the first load (206, 208, 234, 236, 300, 400) and the second load (206, 208, 234, 236, 300, 400) to reduce the second quantity of power, wherein the selection criterion is based in part on at least two of a restart criterion, a product storage criterion, a final product closeness criterion, an oversize criterion, and a magnitude criterion of each of the first load (206, 208, 234, 236, 300, 400) and the second load (206, 208, 234, 236, 300, 400);
reducing one of the first portion of the second quantity of power and the second portion of the second quantity of power based on the calculation of the selection criteria.

2. The method of claim 1, further comprising calculating the selection criterion based in part on each of the restart criterion, the product storage criterion, the final product closeness criterion, the oversize criterion, and the magnitude criterion.

3. The method of claim 1 or 2, further comprising delivering the first output product to a first buffer, the first buffer increasing the product storage criterion of the first load (206, 208, 234, 236, 300, 400).

4. The method of claim 3, further comprising delivering the first output product from the first load (206, 208, 234, 236, 300, 400) to the first buffer and delivering the first output product from the first buffer to the second load (206, 208, 234, 236, 300, 400).

5. The method of any one of claims 1 to 4, further comprising calculating an automation level and a production change capability for each of the first load (206, 208, 234, 236, 300, 400) and the second load (206, 208, 234, 236, 300, 400) and calculating the selection criterion based in part on each of the restart criterion, the product storage criterion, the final product closeness criterion, the oversize criterion, the magnitude criterion, the automation level, and the production change capability.

6. The method of any one of claims 1 to 5, further comprising storing the calculated selection criterion in the controller (138), which is a microgrid controller.

7. The method of any one of claims 1 to 6, wherein the first load (206, 208, 234, 236, 300, 400) is one of a demineralized water plant (300), an electrolyzer (400), and a methanol synthesis plant (206), and the second load (206, 208, 234, 236, 300, 400) is one of the electrolyzer (400), the methanol synthesis plant (206), and a methanol to gasoline plant (208).

8. The method of any one of claims 3 to 7, wherein the first buffer is one of a demineralized water tank (212), a steam tank (222), a hydrogen tank (214), a CO2 tank (224), and a methanol tank (216).

9. The method of any one of claims 1 to 8, wherein the first load (206, 208, 234, 236, 300, 400) and the second load (206, 208, 234, 236, 300, 400) include a plurality of subsystems, the method further comprising calculating the selection criterion for each of the subsystems of the plurality of subsystems.

10. The method of claim 9, wherein the reducing step includes lowering an operational setpoint of one of the subsystems of the plurality of subsystems based in part on the selection criterion.

11. The method of any one of claims 1 to 10, wherein the green generating systems includes one of a wind turbine (114), a solar power system (116, 126), and a green-fueled gas turbine (118),
and/or
wherein the first load (206, 208, 234, 236, 300, 400) includes an electrolyzer (400), the first output product includes hydrogen, the second load (206, 208, 234, 236, 300, 400) includes a methanol to gasoline plant (208), and the final output product includes gasoline, and wherein the drawing step further comprises:
powering a methanol synthesis plant (206) to produce methanol in response to the consumption of the hydrogen and a third portion of the second quantity of power; and
delivering the methanol to the methanol to gasoline plant (208).

12. The method of claim 1, wherein the first load (206, 208, 234, 236, 300, 400) is a methanol synthesis plant (206), the first output product includes methanol, the second load (206, 208, 234, 236, 300, 400) is a methanol to gasoline plant (208) and the final output product (204) is gasoline, the method further comprising operating an electrolyzer (400) to produce hydrogen, and delivering the hydrogen to the methanol synthesis plant (206) for use in the production of the methanol.

13. The method of claim 12, further comprising delivering water to the electrolyzer (400), the electrolyzer (400) using the water to produce the hydrogen, delivering water to an electrical steam generator (234), and operating the electrical steam generator (234) to generate steam, and/or
further comprising delivering the steam to a direct air capture plant (236), operating the direct air capture plant (236) to use the steam to extract carbon dioxide from a flow of air, and delivering the carbon dioxide to the methanol synthesis plant (206) for use in the production of the methanol.

14. A production plant (100) using renewable power generation of a plurality of green generating systems to deliver a first quantity of power for powering a production system (202) that operates to produce a final output product (204), in particular by using a method of any of claims 1 to 13, comprising
a plurality of green generating systems connected to a local energy grid (102), the plurality of green generating systems delivers the first quantity of power and operable to produce a maximum generatable quantity of power,
a controller (138) to control the plurality of green generating systems;
wherein the controller (138) is operable to define a power buffer for the first quantity of power as an amount of power which could be delivered to the production plant (100) if the first quantity of power is insufficient, and
the controller (138) is operable to define a power difference defined by the maximum generatable quantity of power minus the first quantity of power and the power buffer as a second quantity of power from the production plant (100) which is used to power the production system (202) that operates to produce the final output product (204).

15. The production plant (100) of claim 14, wherein the final output product (204) is at least one of gasoline, methanol, ammonia or hydrogen.

## Patentansprüche

1. Verfahren zum Betreiben einer Produktionsanlage (100), die mehrere grünen Erzeugungssysteme umfasst, die mit einem lokalen Energienetz (102) und einer Steuerung (138) verbunden sind, um eine erste Stromquantität zu liefern, und Betreiben eines Produktionssystems (202), um ein endgültiges Ausgangsprodukt (204) unter Verwendung einer Erzeugung erneuerbarer Energie der mehreren grünen Erzeugungssysteme zu produzieren, wobei das Verfahren Folgendes umfasst:
Verteilen der mehreren grünen Erzeugungssysteme, um die erste Stromquantität an die Produktionsanlage (100) zu liefern, wobei die mehreren grünen Erzeugungssysteme betreibbar sind, um eine maximal erzeugbare Stromquantität zu produzieren, und durch die Steuerung (138) gesteuert zu werden;
Definieren eines Strompuffers für die erste Stromquantität als eine Strommenge, die an die Produktionsanlage (100) geliefert werden könnte, wenn die erste Stromquantität unzureichend ist;
Entnehmen einer zweiten Stromquantität aus der Produktionsanlage (100), um das Produktionssystem (202) mit Strom zu versorgen, das betrieben wird, um das endgültige Ausgangsprodukt (204) zu produzieren, wobei der Entnahmeschritt ferner Folgendes umfasst:
Versorgen einer ersten Last (206, 208, 234, 236, 300, 400) des Produktionssystems (202), um ein erstes Ausgangsprodukts als Reaktion auf den Verbrauch eines ersten Teils der zweiten Stromquantität zu produzieren;
Versorgen einer zweiten Last (206, 208, 234, 236, 300, 400) des Produktionssystems (202), um das endgültige Ausgangsprodukts teilweise basierend auf dem ersten Ausgangsprodukt und als Reaktion auf den Verbrauch eines zweiten Teils der zweiten Stromquantität zu produzieren;
Berechnen einer Stromdifferenz zwischen der maximal erzeugbaren Stromquantität minus dem Strompuffer und der zweiten Stromquantität;
Reduzieren der zweiten Stromquantität als Reaktion darauf, dass die Stromdifferenz angibt, dass die zweite Stromquantität größer als die maximal erzeugbare Stromquantität minus dem Strompuffer ist, wobei der Reduzierungsschritt einer Sequenz von Reduzierungen folgt, die Folgendes beinhaltet:
Bestimmen eines Auswahlkriteriums für jede der ersten Last (206, 208, 234, 236, 300, 400) und der zweiten Last (206, 208, 234, 236, 300, 400), um die zweite Stromquantität zu reduzieren, wobei das Auswahlkriterium teilweise auf mindestens zwei von einem Neustartkriterium, einem Produktspeicherkriterium, einem Nähe-Kriterium zu endgültigen Produkt, einem Übergrößenkriterium und einem Größenkriterium jeder der ersten Last (206, 208, 234, 236, 300, 400) und der zweiten Last (206, 208, 234, 236, 300, 400) basiert;
Reduzieren des ersten Teils der zweiten Stromquantität oder des zweiten Teils der zweiten Stromquantität basierend auf der Berechnung der Auswahlkriterien.

2. Verfahren nach Anspruch 1, das ferner das Berechnen des Auswahlkriteriums teilweise basierend auf jedem von dem Neustartkriterium, dem Produktspeicherkriterium, dem Nähe-Kriterium zum endgültigen Produkt, dem Übergrößenkriterium und dem Größenkriterium umfasst.

3. Verfahren nach Anspruch 1 oder 2, das ferner das Liefern des ersten Ausgangsprodukts an einen ersten Puffer umfasst, wobei der erste Puffer das Produktspeicherkriterium der ersten Last (206, 208, 234, 236, 300, 400) erhöht.

4. Verfahren nach Anspruch 3, das ferner das Liefern des ersten Ausgangsprodukts von der ersten Last (206, 208, 234, 236, 300, 400) an den ersten Puffer und das Liefern des ersten Ausgangsprodukts von dem ersten Puffer an die zweite Last (206, 208, 234, 236, 300, 400) umfasst.

5. Verfahren nach einem der Ansprüche 1 bis 4, das ferner das Berechnen eines Automatisierungsgrads und einer Produktionsänderungsfähigkeit für jede der ersten Last (206, 208, 234, 236, 300, 400) und der zweiten Last (206, 208, 234, 236, 300, 400) und das Berechnen des Auswahlkriteriums zum Teil basierend auf jedem von dem Neustartkriterium, dem Produktspeicherkriterium, dem Nähe-Kriterium zum endgültigen Produkt, dem Übergrößenkriterium, dem Größenkriterium, dem Automatisierungsgrad und der Produktionsänderungsfähigkeit umfasst.

6. Verfahren nach einem der Ansprüche 1 bis 5, das ferner das Speichern des berechneten Auswahlkriteriums in der Steuerung (138) umfasst, die eine Mikrogittersteuerung ist.

7. Verfahren nach einem der Ansprüche 1 bis 6, wobei die erste Last (206, 208, 234, 236, 300, 400) eines von einer Anlage für demineralisiertes Wasser (300), einem Elektrolyseur (400) und einer Methanolsyntheseanlage (206) ist, und die zweite Last (206, 208, 234, 236, 300, 400) eines von dem Elektrolyseur (400), der Methanolsyntheseanlage (206) und einer Methanol-zu-BenzinAnlage (208) ist.

8. Verfahren nach einem der Ansprüche 3 bis 7, wobei der erste Puffer eines von einem Tank für demineralisiertes Wasser (212), einem Dampftank (222), einem Wasserstofftank (214), einem CO2-Tank (224) und einem Methanoltank (216) ist.

9. Verfahren nach einem der Ansprüche 1 bis 8, wobei die erste Last (206, 208, 234, 236, 300, 400) und die zweite Last (206, 208, 234, 236, 300, 400) mehrere Subsysteme beinhalten, wobei das Verfahren ferner das Berechnen des Auswahlkriteriums für jedes der Subsysteme der mehreren Subsysteme beinhaltet.

10. Verfahren nach Anspruch 9, wobei der Reduzierungsschritt das Absenken eines Betriebssollwerts eines der Subsysteme der mehreren Subsysteme teilweise basierend auf dem Auswahlkriterium beinhaltet.

11. Verfahren nach einem der Ansprüche 1 bis 10, wobei die grünen Erzeugungssysteme eine Windturbine (114) oder ein Solarenergiesystem (116, 126) oder eine mit grünem Kraftstoff betriebene Gasturbine (118) beinhalten,
und/oder
wobei die erste Last (206, 208, 234, 236, 300, 400) einen Elektrolyseur (400) beinhaltet, das erste Ausgangsprodukt Wasserstoff beinhaltet, die zweite Last (206, 208, 234, 236, 300, 400) eine Methanol-zu-Benzinanlage (208) beinhaltet und das endgültige Ausgangsprodukt Benzin beinhaltet, und wobei der Entnahmeschritt ferner Folgendes umfasst:
Betreiben einer Methanolsyntheseanlage (206), um Methanol als Reaktion auf den Verbrauch des Wasserstoffs und einen dritten Teil der zweiten Stromquantität zu erzeugen; und
das Liefern des Methanols zur Methanol-zu-Benzinanlage (208).

12. Verfahren nach Anspruch 1, wobei die erste Last (206, 208, 234, 236, 300, 400) eine Methanolsyntheseanlage (206) ist, das erste Ausgangsprodukt Methanol beinhaltet, die zweite Last (206, 208, 234, 236, 300, 400) eine Methanol-zu-Benzinanlage (208) ist und das endgültige Ausgangsprodukt (204) Benzin ist, wobei das Verfahren ferner das Betreiben eines Elektrolyseurs (400) umfasst, um Wasserstoff zu produzieren und das Liefern des Wasserstoffs zur Methanolsyntheseanlage (206), zur Verwendung bei der Produktion des Methanols umfasst.

13. Verfahren nach Anspruch 12, das ferner das Liefern von Wasser zu dem Elektrolyseur (400), wobei der Elektrolyseur (400) das Wasser verwendet, um den Wasserstoff zu erzeugen, das Liefern von Wasser zu einem elektrischen Dampferzeuger (234) und das Betreiben des elektrischen Dampferzeugers (234), um Dampf zu erzeugen, umfasst und/oder
ferner das Liefern des Dampfes zu einer Direktluftauffanganlage (236), die die Direktluftauffanganlage (236) betreibt, um den Dampf zu verwenden, um Kohlendioxid aus einem Luftstrom zu extrahieren, und das Zuführen des Kohlendioxids zu der Methanolsyntheseanlage (206) zur Verwendung bei der Produktion des Methanols umfasst.

14. Produktionsanlage (100), die eine Stromerzeugung aus erneuerbaren Energien mehrerer grüner Erzeugungssysteme verwendet, um eine erste Stromquantität zum Versorgen eines Produktionssystems (202) mit Strom zu liefern, das betrieben wird, um ein endgültiges Ausgangsprodukt (204) zu erzeugen, insbesondere unter Verwendung eines Verfahrens nach einem der Ansprüche 1 bis 13, das Folgendes umfasst
mehrere grüne Erzeugungssysteme, die mit einem lokalen Energienetz (102) verbunden sind, wobei die mehreren grünen Erzeugungssysteme die erste Stromquantität liefern und betreibbar sind, um eine maximal erzeugbare Stromquantität zu produzieren,
eine Steuerung (138), um die mehreren grünen Erzeugungssysteme zu steuern;
wobei die Steuerung (138) betreibbar ist, um einen Strompuffer für die erste Stromquantität als eine Strommenge zu definieren, die an die Produktionsanlage (100) geliefert werden könnte, falls die erste Stromquantität unzureichend ist, und
die Steuerung (138) betreibbar ist, um eine Stromdifferenz zu definieren, die durch die maximal erzeugbare Stromquantität minus der ersten Stromquantität und den Strompuffer als eine zweite Stromquantität von der Produktionsanlage (100) definiert ist, die verwendet wird, um das Produktionssystem (202) mit Strom zu versorgen, das betrieben wird, um das endgültige Ausgangsprodukt (204) zu erzeugen.

15. Produktionsanlage (100) nach Anspruch 14, wobei das endgültige Ausgangsprodukt (204) Benzin und/oder Methanol und/oder Ammoniak und/oder Wasserstoff ist.

## Revendications

1. Un procédé pour faire fonctionner une usine (100) de production comprenant une pluralité de systèmes de génération verts connectés à un réseau (102) local d'énergie et une unité (138) de commande pour envoyer une première quantité d'énergie et faire fonctionner un système (202) de production pour produire un produit (204) de sortie final en utilisant une génération d'énergie renouvelable de la pluralité de systèmes de génération verts, le procédé comprenant :
distribuer la pluralité de systèmes de génération verts pour envoyer la première quantité d'énergie à l'usine (100) de production, la pluralité de systèmes de génération verts pouvant fonctionner pour produire une quantité maximum pouvant être générée d'énergie et étant commandée par l'unité (138) de commande ;
définir un tampon d'énergie pour la première quantité d'énergie comme quantité d'énergie, qui pourrait être envoyée à l'usine (100) de production si la première quantité d'énergie est insuffisante ;
tirer une deuxième quantité d'énergie de l'usine (100) de production pour alimenter le système (202) de production, qui fonctionne pour produire le produit (204) de sortie final, le stade dans lequel on tire une deuxième quantité d'énergie comprenant en outre ;
alimenter une première charge (206, 208, 234, 236, 300, 400) du système (202) de production pour produire un premier produit de sortie en réaction à la consommation d'une première partie de la deuxième quantité d'énergie ;
alimenter une deuxième charge (206, 208, 234, 236, 300, 400) du système (202) de production pour produire le produit de sortie final sur la base en partie du premier produit de sortie et en réaction à la consommation d'une deuxième partie de la deuxième quantité d'énergie ;
calculer une différence d'énergie entre la quantité maximum d'énergie pouvant être générée moins le tampon d'énergie et la deuxième quantité d'énergie ;
réduire la deuxième quantité d'énergie en réaction à la différence d'énergie indiquant que la deuxième quantité d'énergie est plus grande que la quantité d'énergie maximum pouvant être générée moins le tampon d'énergie, le stade de réduction suivant une séquence de réductions, qui comprend :
déterminer un critère de sélection pour chacune de la première charge (206, 208, 234, 236, 300, 400) et de la deuxième charge (206, 208, 234, 236, 300, 400) pour réduire la deuxième quantité d'énergie, dans lequel le critère de sélection repose en partie sur au moins deux d'un critère de redémarrage, d'un critère de stockage de produit, d'un critère de proximité du produit final, d'un critère de surdimensionnement et d'un critère d'amplitude de chacune de la première charge (206, 208, 234, 236, 300, 400) et de la deuxième charge (206, 208, 234, 236, 300, 400) ;
réduire l'une de la première partie de la deuxième quantité d'énergie et de la deuxième partie de la deuxième quantité d'énergie sur la base du calcul du critère de sélection.

2. Le procédé de la revendication 1, comprenant en outre calculer le critère de sélection sur la base en partie de chacun du critère de redémarrage, d'un critère de stockage de produit, d'un critère de proximité du produit final, d'un critère de surdimensionnement et d'un critère d'amplitude.

3. Le procédé de la revendication 1 ou 2, comprenant en outre envoyer le premier produit de sortie à un premier tampon, le premier tampon augmentant le critère de stockage de produit de la première charge (206, 208, 234, 236, 300, 400).

4. Le procédé de la revendication 3, comprenant en outre envoyer le premier produit de sortie de la première charge (206, 208, 234, 236, 300, 400) au premier tampon et envoyer le premier produit de sortie du premier tampon à la deuxième charge (206, 208, 234, 236, 300, 400).

5. Le procédé de l'une quelconque des revendications 1 à 4, comprenant en outre calculer un niveau d'automatisation et une aptitude à changer de production pour chacune de la première charge (206, 208, 234, 236, 300, 400) et de la deuxième charge (206, 208, 234, 236, 300, 400) et calculer le critère de sélection sur la base en partie de chacun du critère de redémarrage, d'un critère de stockage de produit, d'un critère de proximité du produit final, d'un critère de surdimensionnement, d'un critère d'amplitude, du niveau d'automatisation et de l'aptitude à changer de production.

6. Le procédé de l'une quelconque des revendications 1 à 5, comprenant en outre mettre en mémoire le critère de sélection calculé dans l'unité (138) de commande, qui est une unité de commande de microréseau.

7. Le procédé de l'une quelconque des revendications 1 à 6, dans lequel la première charge (206, 208, 234, 236, 300, 400) est l'un d'une usine (300) d'eau déminéralisée, d'un électrolyseur (400) et d'une usine (206) de synthèse du méthanol et la deuxième charge (206, 208, 234, 236, 300, 400) est l'un de l'électrolyseur (400), de l'usine (206) de synthèse du méthanol et d'une usine (208) de transformation du méthanol en essence.

8. Le procédé de l'une quelconque des revendications 3 à 7, dans lequel le premier tampon est l'un d'une cuve (212) d'eau déminéralisée, d'une cuve (222) de vapeur, d'une cuve (214) d'hydrogène, d'une cuve (224) de CO2 et d'une cuve (216) de méthanol.

9. Le procédé de l'une quelconque des revendications 1 à 8, dans lequel la première charge (206, 208, 234, 236, 300, 400) et la deuxième charge (206, 208, 234, 236, 300, 400) comprennent une pluralité de sous-systèmes, le procédé comprenant en outre calculer le critère de sélection pour chacun des sous-systèmes de la pluralité de sous-systèmes.

10. Le procédé de la revendication 9, dans lequel le stade de réduction comprend abaisser un point de consigne opérationnel de l'un des sous-systèmes de la pluralité de sous-systèmes sur la base en partie du critère de sélection.

11. Le procédé de l'une quelconque des revendications 1 à 10, dans lequel les systèmes de génération verts comprennent l'un d'une éolienne (114), d'un système (116, 126) d'énergie solaire et d'une turbine (118) à gaz à combustible vert,
et/ou
dans lequel
la première charge (206, 208, 234, 236, 300, 400) comprend un électrolyseur (400), le premier produit de sortie comprend de l'hydrogène, la deuxième charge (206, 208, 234, 236, 300, 400) comprend une usine (208) de transformation du méthanol en essence et le produit de sortie final comprend de l'essence, et dans lequel le stade dans lequel on tire une deuxième quantité d'énergie de l'usine de production comprend :
alimenter une usine (206) de synthèse du méthanol pour produire du méthanol en réaction à la consommation de l'hydrogène et d'une troisième partie de la deuxième quantité d'énergie ; et
envoyer le méthanol à l'usine (208) de transformation du méthanol en essence.

12. Le procédé de la revendication 1, dans lequel la première charge (206, 208, 234, 236, 300, 400) est une usine (206) de synthèse du méthanol, le premier produit de sortie comprend du méthanol, la deuxième charge (206, 208, 234, 236, 300, 400) est une usine (208) de transformation du méthanol en essence et le produit (204) de sortie final est de l'essence, le procédé comprenant en outre faire fonctionner un électrolyseur (400) pour produire de l'hydrogène et envoyer l'hydrogène à l'usine (206) de synthèse du méthanol en vue de l'utiliser dans la production du méthanol.

13. Le procédé de la revendication 12, comprenant en outre envoyer de l'eau à l'électrolyseur (400), l'électrolyseur (400) utilisant l'eau pour produire l'hydrogène, envoyer de l'eau à un générateur (234) électrique de vapeur et faire fonctionner le générateur (234) électrique de vapeur pour générer de la vapeur, et/ou
comprenant en outre envoyer la vapeur à une usine (236) de captage directe de l'air, faire fonctionner l'usine (236) de captage directe de l'air pour utiliser la vapeur afin d'extraire du dioxyde de carbone d'un courant d'air et envoyer le dioxyde de carbone à l'usine (206) de synthèse du méthanol pour l'utiliser dans la production du méthanol.

14. Une usine (100) de production utilisant une génération d'énergie renouvelable d'une pluralité de systèmes de génération verts pour envoyer une première quantité d'énergie pour alimenter un système (202) de production, qui fonctionne pour produire un produit (204) de sortie final, en particulier en utilisant un procédé suivant l'une quelconque des revendications 1 à 13, comprenant
une pluralité de systèmes de génération verts connectés à un réseau (102) local d'énergie, la pluralité de systèmes de génération verts envoyant la première quantité d'énergie et pouvant fonctionner pour produire une quantité d'énergie maximum pouvant être générée,
une unité (138) de commande pour commander la pluralité de systèmes génération verts ;
dans lequel l'unité (138) de commande peut fonctionner pour définir un tampon d'énergie pour la première quantité d'énergie comme une quantité d'énergie, qui pourrait être envoyée à l'usine (100) de production, si la première quantité d'énergie est insuffisante, et
l'unité (138) de commande peut fonctionner pour définir une différence d'énergie, définie par la quantité maximum d'énergie pouvant être générée moins la première quantité d'énergie et le tampon d'énergie, comme une deuxième quantité d'énergie provenant de l'usine (100) de production, qui est utilisée pour alimenter le système (202) de production, qui fonctionne pour produire le produit (204) de sortie final.

15. L'usine (100) de production de la revendication 14, dans laquelle le produit (204) de sortie final est au moins l'un de l'essence, du méthanol, de l'ammoniac ou de l'hydrogène.
